# EUROPEAN PATENT APPLICATION

(11) **EP 2 991 208 A1**
(43) Date of publication of application: **02.03.2016**
(21) Application number: 15178714.0
(22) Date of filing: 28.07.2015
(51) Int. Cl.: H02M 1/36, H02M 3/335

(54) **METHOD FOR STARTING BOOST DC/DC CIRCUITS WITH ISOLATING TRANSFORMERS AND APPARATUS THEREOF**

(30) Priority: 29.08.2014 CN 201410436825
(71) Applicant: Sungrow Power Supply Co., Ltd., 230088 Hefei (CN)
(72) Inventor: ZHU, Ruilin, 230088 Hefei (CN); ZONG, Yanling, 230088 Hefei (CN); LI, Yuechao, 230088 Hefei (CN); XUE, Liying, 230088 Hefei (CN); ZHOU, Lingbing, 230088 Hefei (CN)
(74) Representative: Tappe, Udo

(57) **Abstract**

A method for starting a boost DC/DC circuit with isolating transformer is provided. A charging operation on an output side capacitor (C₂) is achieved through controlling the turn-on and turn-off of four power transistors (S₁-S₄) at an input side, and the starting process is accomplished when the voltage across the output side capacitor (C₂) reaches the voltage threshold. The starting method may be realized based on a conventional circuit without modifying the circuit structure, and no power- consumption component such as a resistor is added to the circuit, thus no extra loss is produced in the starting process. An apparatus for starting the boost DC/DC circuit with isolating transformer is further provided.

## Description

### TECHNICAL FIELD

The invention relates to the field of DC/DC circuit control technology, and in particular to a method for starting a boost DC/DC circuit with an isolating transformer and an apparatus thereof.

### BACKGROUND

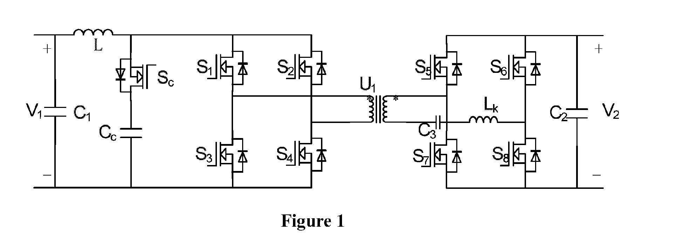

Due to its low input voltage and high output voltage, a photovoltaic and energy storage system commonly has a boost DC/DC circuit with an isolating transformer to fit a wide range of input voltage. The structure of the boost DC/DC circuit with an isolating transformer is shown in Figure 1. The circuit includes: a transformer U1; an input side capacitor C1, an input inductor L, a clamp power transistor Sc, a clamp capacitor Cc, a first power transistor S1, a second power transistor S2, a third power transistor S3, and a fourth power transistor S4, which are located at the low voltage side; and a fifth power transistor S5, a sixth power transistor S6, a seventh power transistor S7, a eighth power transistor S8, an output side capacitor C2, an output inductor Lk, and a third capacitor C3, which are located at the high voltage side.

Since the transformer U1 is an isolating transformer, the input voltage is not able to charge the output side capacitor C2 directly. For normal operation of the circuit, soft-starting is performed to increase voltage across the output side capacitor C2 to a preset voltage value. Conventionally starting is performed in a fly-back manner, or by connecting a resistor in parallel with the clamp capacitor Cc.

However, for starting in a fly-back manner, an additional fly-back winding and diode are required in the circuit, which causes an increase in circuit cost and volume. Connection of a resistor in parallel with the clamp capacitor Cc increases loss of the circuit.

### SUMMARY

In view of this, the invention is to provide a method for starting a boost DC/DC circuit with an isolating transformer and an apparatus thereof. Soft-starting may be performed without modifying the structure of the boost DC/DC circuit with isolating transformer, and without extra loss.

To achieve the above purpose, the following technical solution is provided.

A method for starting a boost DC/DC circuit with an isolating transformer is provided. The boost DC/DC circuit includes an input inductor, a clamp power transistor, an output side capacitor, a first power transistor, a second power transistor, a third power transistor, and a fourth power transistor. The starting method includes: charging the output side capacitor, until the voltage across the output side capacitor reaches a voltage threshold.

The process of charging the output side capacitor comprises:
turning on a first power transistor pair, to charge the output side capacitor;
turning off the first power transistor pair when the turn-on time of the first power transistor pair reaches a first duration;
turning on the clamp power transistor, to reset the input inductor;
turning off the clamp power transistor when the turn-on time of the clamp power transistor reaches a second duration;
turning on the second power transistor pair, to charge the output side capacitor;
turning off the second power transistor pair when the turn-on time of the second power transistor pair reaches the first duration;
turning on the clamp power transistor, to reset the input inductor; and
turning off the clamp power transistor when the turn-on time of the clamp power transistor reaches the second duration;
where the turn-on timings of the first power transistor pair and the second power transistor pair differ by half a switching cycle.

Preferably, the first power transistor pair comprises the first power transistor and the fourth power transistor, and the second power transistor pair comprises the second power transistor and the third power transistor.

Preferably, the first power transistor pair comprises the second power transistor and the third power transistor, and the second power transistor pair comprises the first power transistor and the fourth power transistor.

Preferably, the first duration is less than 0.25T, and the second duration is no greater than the difference between 0.5T and the first duration; wherein T is the switching period of the first power transistor, the second power transistor, the third power transistor and the fourth power transistor.

Preferably, the first power transistor pair and the clamp power transistor are turned on alternately for half a switching cycle, and the second power transistor pair and the clamp power transistor are turned on alternately for the other half of the switching cycle, the first duration is less than 0.5T but no less than 0.25T, and the second duration is the difference between 0.5T and the first duration, wherein T is the switching period of the first power transistor, the second power transistor, the third power transistor and the fourth power transistor.

Preferably, the voltage threshold is N times the input voltage of the boost DC/DC circuit with isolating transformer, wherein N is a transformation ratio of the isolating transformer.

An apparatus for starting a boost DC/DC circuit with an isolating transformer is provided in the invention, where the boost DC/DC circuit includes an input inductor, a clamp power transistor, an output side capacitor, a first power transistor, a second power transistor, a third power transistor, and a fourth power transistor. The starting apparatus includes:
a control device, configured to control the turn-on and turn-off of the first power transistor S1, the second power transistor S2, the third power transistor S3 and the fourth power transistor S4, to charge the output side capacitor; and
a processing device, configured to determine the starting process is accomplished, and trigger the control device to stop running when the voltage across the output side capacitor reaches a voltage threshold;
where the control device includes:
   a first control unit, configured to control a first power transistor pair to be turned on, in order to charge the output side capacitor;
   a second control unit, configured to control the first power transistor pair to be turned off when the turn-on time of the first power transistor pair reaches a first duration;
   a third control unit, configured to control the clamp power transistor to be turned on, in order to reset the input inductor;
   a fourth control unit, configured to control the clamp power transistor to be turned off when the turn-on time of the clamp power transistor reaches a second duration;
   a fifth control unit, configured to control the second power transistor pair to be turned on, in order to charge the output side capacitor;
   a sixth control unit, configured to control the second power transistor pair to be turned off when the turn-on time of the second power transistor pair reaches the first duration;
   a seventh control unit, configured to control the clamp power transistor to be turned on, in order to reset the input inductor; and
   an eighth control unit, configured to control the clamp power transistor to be turned off when the turn-on time of the clamp power transistor reaches the second duration;
   where the turn-on timings of the first power transistor pair and the second power transistor pair differ by half a switching cycle.

Preferably, the first power transistor pair comprises the first power transistor and the fourth power transistor, and the second power transistor pair comprises the second power transistor and the third power transistor.

Preferably, the first power transistor pair comprises the second power transistor and the third power transistor, and the second power transistor pair comprises the first power transistor and the fourth power transistor.

It can be seen that, beneficial effects of the invention are: in the method for starting the boost DC/DC circuit with isolating transformer in the invention, the charging operation on the output side capacitor is achieved through controlling the turn-on and turn-off of the four power transistors at the input side, and the starting process is accomplished when the voltage across the output side capacitor reaches the voltage threshold. The starting method in the invention may be realized on a conventional circuit without modifying the circuit structure, and no power- consumption component such as resistor is added to the circuit, thus no extra loss is produced in the starting process.

### BRIEF DESCRIPTION OF THE DRAWINGS

In order to illustrate the technical solutions according to the embodiments of the invention or in the conventional technology more clearly, the drawings to be used in the description of the embodiments or the conventional technology are described briefly hereinafter. Apparently, the drawings in the following description are only a part of rather than all of the embodiments of the invention, and other drawings may be obtained by those skilled in the art according to those drawings without creative effort.
Figure 1 is a diagram of a boost DC/DC circuit with an isolating transformer;
Figure 2 is a flow chart of charging the output side capacitor according to an embodiment of the invention;
Figure 3 is a signal timing diagram according to an embodiment of the invention;
Figures 4a-4f illustrate current paths when the circuit are in one of operating mode 1 to operating mode 6 during charging the output side capacitor based on the signal timing diagram shown in Figure 3;
Figure 5 is another signal timing diagram according to an embodiment of the invention;
Figures 6a-6h illustrate current paths when the circuit are in one of operating mode 1 to operating mode 8 during charging the output side capacitor based on the signal timing diagram shown in Figure 5;
Figure 7 is a structural diagram of an apparatus for starting the boost DC/DC circuit with an isolating transformer according to an embodiment of the invention.

### DETAILED DESCRIPTION OF THE EMBODIMENTS

Hereinafter, the technical solutions according to the embodiments of the invention are described clearly and completely in conjunction with the drawings according to the embodiments of the invention. Apparently, the described embodiments are only a part of rather than all of the embodiments of the invention. All the other embodiments obtained by those skilled in the art based on the embodiments of the invention without creative effort fall within the protection scope of the invention.

A method for starting a boost DC/DC circuit with isolating transformer is provided in the invention, and the structure of the boost DC/DC circuit with isolating transformer is shown in Figure 1. The circuit mainly includes an input inductor L, a clamp power transistor Sc, an output side capacitor C2, a first power transistor S1, a second power transistor S2, a third power transistor S3, and a fourth power transistor S4. The output side capacitor C2 of the conventional circuit is charged through controlling turn-on and turn-off of the power transistors (i.e., the first power transistor S1, the second power transistor S2, the third power transistor S3, and the fourth power transistor S4) at the low voltage side, thus a soft-start for the circuit is achieved without extra loss produced in the process of soft-starting.

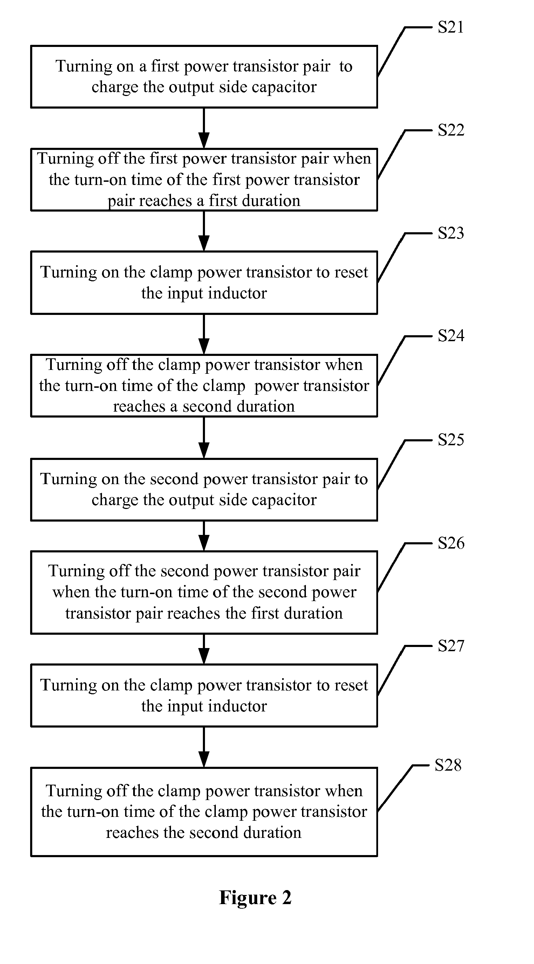

The starting method according to the embodiment of the invention includes: charging the output side capacitor C2, until the voltage across the output side capacitor C2 reaches a voltage threshold. The voltage threshold is N times the input voltage of the boost DC/DC circuit with isolating transformer, where N is a transformation ratio of the isolating transformer. The process of charging the output side capacitor C2 is shown in Figure 2. The process includes steps S21-S28.

In step S21, a first power transistor pair is turned on, to charge the output side capacitor C2.

The first power transistor pair includes the first power transistor S1 and the fourth power transistor S4, or the first power transistor pair includes the second power transistor S2 and the third power transistor S3.

In step S22, when the turn-on time of the first power transistor pair reaches a first duration, the first power transistor pair is turned off.

In step S23, the clamp power transistor Sc is turned on, to reset the input inductor L.

After the first power transistor pair is turned off, the four power transistors at the input side are all in an off-state. The inductor current charges the clamp capacitor Cc through the clamp power transistor Sc, and the input inductor L is demagnetized. To prevent too high voltage across the clamp capacitor Cc, the clamp power transistor Sc is turned on, and the inductor current may flow reversely.

In step S24, when the turn-on time of the clamp power transistor Sc reaches a second duration, the clamp power transistor Sc is turned off.

In step S25, the second power transistor pair is turned on, to charge the output side capacitor C2.

In a case that the first power transistor pair includes the first power transistor S1 and the fourth power transistor S4, the second power transistor pair includes the second power transistor S2 and the third power transistor S3, and in a case that the first power transistor pair includes the second power transistor S2 and the third power transistor S3, the second power transistor pair includes the first power transistor S1 and the fourth power transistor S4. There is a difference of half a switching cycle between the turn-on timing of the first power transistor pair and that of the second power transistor pair.

In step S26, when the turn-on time of the second power transistor pair reaches the first duration, the second power transistor pair is turned off.

In step S27, the clamp power transistor Sc is turned on, to reset the input inductor L.

After the second power transistor pair is turned off, the four power transistors at the input side are all in the off-state. The inductor current charges the clamp capacitor Cc through the clamp power transistor Sc, and the input inductor L is demagnetized. To prevent too high voltage across the clamp capacitor Cc, the clamp power transistor Sc is turned on, and the inductor current may flow reversely.

In step S28, when the turn-on time of the clamp power transistor Sc reaches the second duration, the clamp power transistor Sc is turned off.

In the implementation, the charging process as shown in Figure 2 is repeatedly performed, and meanwhile the voltage across the output side capacitor C2 is detected. The starting process is accomplished when the voltage across the output side capacitor C2 reaches a voltage threshold.

In the method for starting the boost DC/DC circuit with isolating transformer in the invention, the charging operation on the output side capacitor is achieved through controlling the turn-on and turn-off of the four power transistors at the input side, and the starting process is accomplished when the voltage across the output side capacitor reaches the voltage threshold. The starting method in the invention may be realized based on a conventional circuit without modifying the circuit structure, and no power-consumption component such as resistor is added to the circuit, thus no extra loss is produced in the starting process.

In the implementation, the first duration may be set to be less than 0.25T, and the second duration is set to be no greater than the difference between 0.5T and the first duration, where T is the switching period of the first power transistor S1, the second power transistor S2, the third power transistor S3 and the fourth power transistor S4.

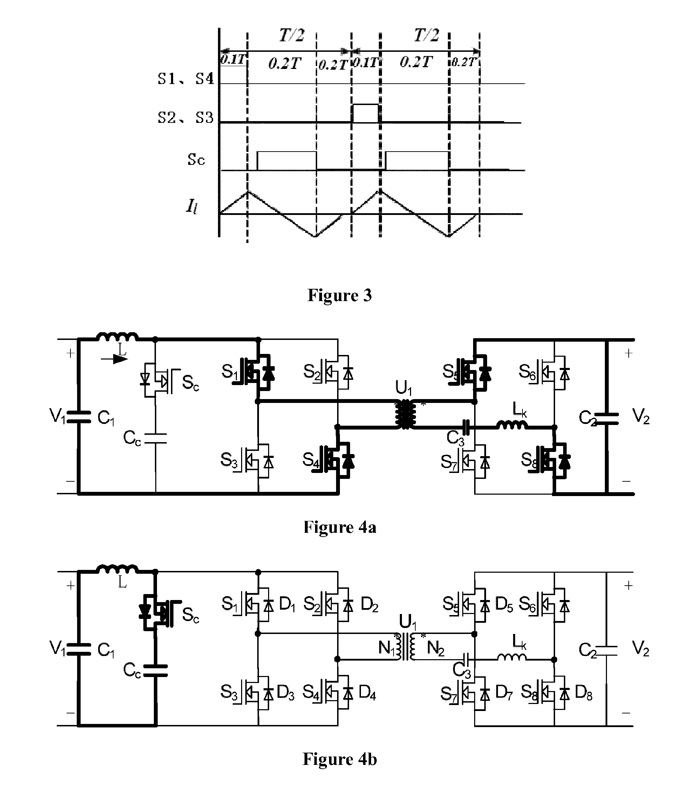

The case that the first duration is 0.1T, the second duration is 0.2T, and the first power transistor S1 and the fourth power transistor S4 are turned on is taken as an example, to illustrate the starting method in the invention. Referring to a signal timing diagram shown in Figure 3, a control signal applied to the first power transistor S1 and the fourth power transistor S4, a control signal applied to the second power transistor S2 and the third power transistor S3, a control signal applied to the clamp power transistor Sc, and a current signal I1 flowing through the input inductor L are given.

When the first power transistor S1 and the fourth power transistor S4 are turned on, the circuit enters operating mode 1. At the moment, the current in the circuit flows along the path shown in Figure 4a. The current at the input side flows along the following path: a positive polarity of the input voltage V1- the input inductor L-the first power transistor S1-a first terminal of primary winding of transformer U1-a second terminal of primary winding of transformer U1-the fourth power transistor S4-a negative polarity of the input voltage V1. The current at the output side flows along the following path: a first terminal of secondary winding of transformer U1-the body diode of the fifth power transistor S5-a first terminal of the output side capacitor C2-a second terminal of the output side capacitor C2-the body diode of the eighth power transistor S8-the output inductor Lk-the third capacitor C3-a second terminal of secondary winding of transformer U1.

When the turn-on time of the first power transistor S1 and the fourth power transistor S4 reaches 0.1T, the first power transistor S1 and the fourth power transistor S4 are turned off, and at the moment, the first power transistor S1, the second power transistor S2, the third power transistor S3 and the fourth power transistor S4 at the input side are all turned off. Thus, the circuit enters operating mode 2. As shown in Figure 4b, the inductor current charges the clamp capacitor Cc through the body diode of the clamp power transistor Sc, and the input inductor L is demagnetized. To prevent too high voltage across the clamp capacitor Cc, the clamp power transistor Sc is turned on during this period, to allow the inductor current to flow reversely. It should be noted that, the clamp power transistor Sc may be turned on when the first power transistor S1 and the fourth power transistor S4 are turned off. Alternatively, the clamp power transistor Sc is turned on after the first power transistor S1 and the fourth power transistor S4 are turned off and after the body diode of the clamp power transistor Sc is turned on, as shown in Figure 3.

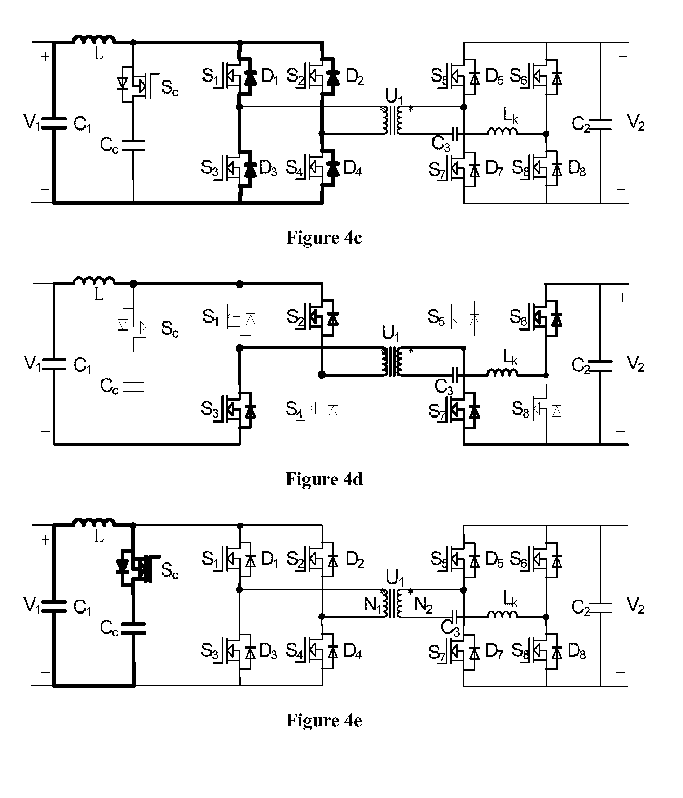

When the turn-on time of the clamp power transistor Sc reaches 0.2T, the clamp power transistor Sc is turned off, and the circuit enters operating mode 3. At the moment, the current in the circuit flows along the path shown in Figure 4c, and body diodes of the first power transistor S1, the second power transistor S2, the third power transistor S3 and the fourth power transistor S4 provide a current free wheeling path for the input inductor L, until the inductor current falls to zero.

When the turn-on time of the first power transistor S1 and the fourth power transistor S4 reaches half a switching cycle, the second power transistor S2 and the third power transistor S3 are turned on, and the circuit enters operating mode 4. At the moment, the current in the circuit flows along the path shown in Figure 4d. The current at the input side flows along the following path: the positive polarity of the input voltage V1- the input inductor L-the second power transistor S2-the second terminal of primary winding of transformer U1-the first terminal of primary winding of transformer U1-the third power transistor S3-the negative polarity of the input voltage V1. The current at the output side flows along the following path: the second terminal of secondary winding of transformer U1-the third capacitor C3-the output inductor Lk-the body diode of the sixth power transistor S6-the first terminal of the output side capacitor C2-the second terminal of the output side capacitor C2-the body diode of the seventh power transistor S7-the first terminal of secondary winding of transformer U1.

When the turn-on time of the second power transistor S2 and the third power transistor S3 reaches 0.1T, the second power transistor S2 and the third power transistor S3 are turned off, and at the moment, the first power transistor S1, the second power transistor S2, the third power transistor S3 and the fourth power transistor S4 at the input side are all turned off. The circuit enters operating mode 5. As shown in Figure 4e, the inductor current charges the clamp capacitor Cc through the body diode of the clamp power transistor Sc, and the input inductor L is demagnetized. To prevent too high voltage across the clamp capacitor Cc, the clamp power transistor Sc is turned on during this period, to allow the inductor current to flow reversely. It should be noted that, the clamp power transistor Sc may be turned on when the second power transistor S2 and the third power transistor S3 are turned off. Alternatively, the clamp power transistor Sc is turned on after the second power transistor S2 and the third power transistor S3 are turned off and after the body diode of the clamp power transistor Sc is turned on, as shown in Figure 3.

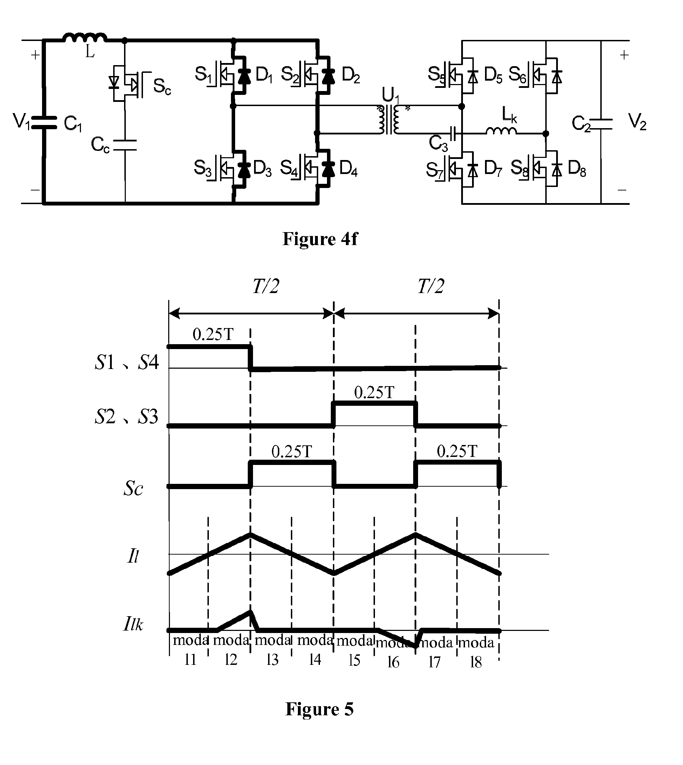

When the turn-on time of the clamp power transistor Sc reaches 0.2T, the clamp power transistor Sc is turned off, and the circuit enters operating mode 6. At the moment, the current in the circuit flows along the path shown in Figure 4f, and body diodes of the first power transistor S1, the second power transistor S2, the third power transistor S3 and the fourth power transistor S4 provide a current free wheeling path for the input inductor L, until the inductor current falls to zero.

If the voltage across the output side capacitor C2 does not reach the voltage threshold, the first power transistor S1 and the fourth power transistor S4 are turned on when the turn-on time of the second power transistor S2 and the third power transistor S3 reaches half a switching cycle. The above charging process is performed once again until the voltage across the output side capacitor C2 reaches the voltage threshold. It should be noted that, after the first power transistor S1 and the fourth power transistor S4 are turned on to charge the output side capacitor C2, the starting process is accomplished if the voltage across the output side capacitor C2 reaches the voltage threshold. Thus the subsequent operation is no longer executed.

According to the invention, alternatively, in a switching cycle, the first power transistor pair and the clamp power transistor Sc are turned on alternately for half the switching cycle, the second power transistor pair and the clamp power transistor Sc are turned on alternately for the remaining half switching cycle. In this case, the first duration is set to be less than 0.5T but no less than 0.25T, and the second duration is set as the difference between 0.5T and the first duration, where T is the switching period of the first power transistor S1, the second power transistor S2, the third power transistor S3 and the fourth power transistor S4.

The case that the first duration is 0.25T, the second duration is 0.25T, and the first power transistor S1 and the fourth power transistor S4 are turned on first is taken as an example, to illustrate the starting method in the invention. Referring to a signal timing diagram shown in Figure 5, a control signal applied to the first power transistor S1 and the fourth power transistor S4, a control signal applied to the second power transistor S2 and the third power transistor S3, a control signal applied to the clamp power transistor Sc, a current signal I1 flowing through the input inductor L and a current signal I1k flowing through the output inductor Lk are given.

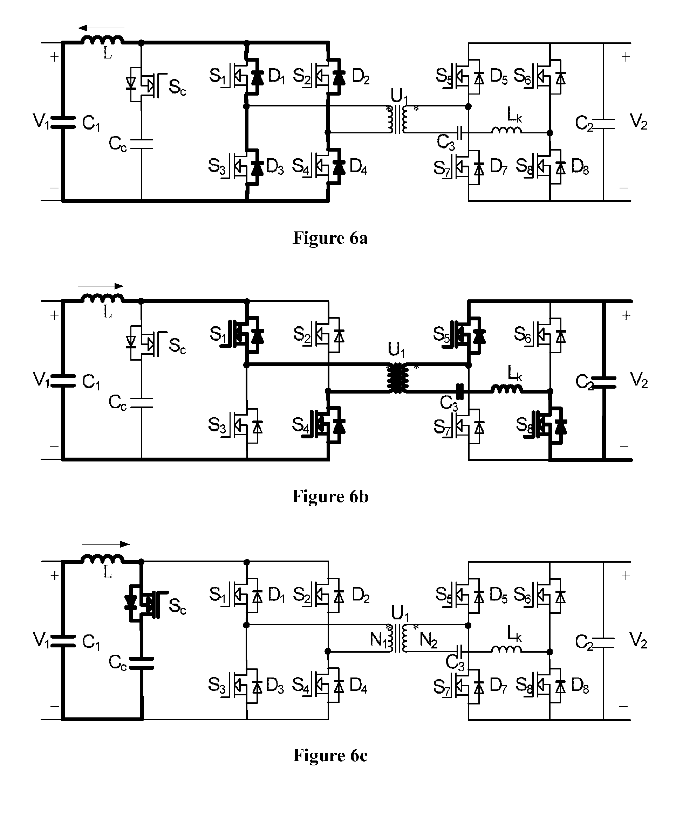

Operating mode 1: the first power transistor S1 and the fourth power transistor S4 are in an on-state, the direction of the inductor current is negative. The inductor current flows through a free wheeling loop consisting of body diodes of the first power transistor S1, the second power transistor S2, the third power transistor S3 and the fourth power transistor S4. The fifth power transistor S5, the sixth power transistor S6, the seventh power transistor S7, and the eighth power transistor S8 located at the output side are turned off, not charging the output side capacitor C2, and the current flows along the path shown in Figure 6a.

Operating mode 2: the first power transistor S1 and the fourth power transistor S4 stay in the on-state, the direction of the inductor current is positive. At the moment the current flows along the path shown in Figure 6b. The current at the input side flows along the following path: a positive polarity of the input voltage V1-the input inductor L-the first power transistor S1-a first terminal of primary winding of transformer U1-a second terminal of primary winding of transformer U1-the fourth power transistor S4-a negative polarity of the input voltage V1. The current at the output side flows along the following path: a first terminal of secondary winding of transformer U1- the body diode of the fifth power transistor S5-a first terminal of the output side capacitor C2-a second terminal of the output side capacitor C2-the body diode of the eighth power transistor S8-the output inductor Lk-the third capacitor C3-a second terminal of secondary winding of transformer U1.

Operating mode 3: when the turn-on time of the first power transistor S1 and the fourth power transistor S4 reaches 0.25T, the first power transistor S1 and the fourth power transistor S4 are turned off, and meanwhile the clamp power transistor Sc is turned on. At the moment the first power transistor S1, the second power transistor S2, the third power transistor S3 and the fourth power transistor S4 at the input side are all turned off. The direction of the inductor current is positive. The inductor current charges the clamp capacitor Cc through the body diode of the clamp power transistor Sc, and the input inductor L is demagnetized. The current in the circuit flows along the path shown in Figure 6c.

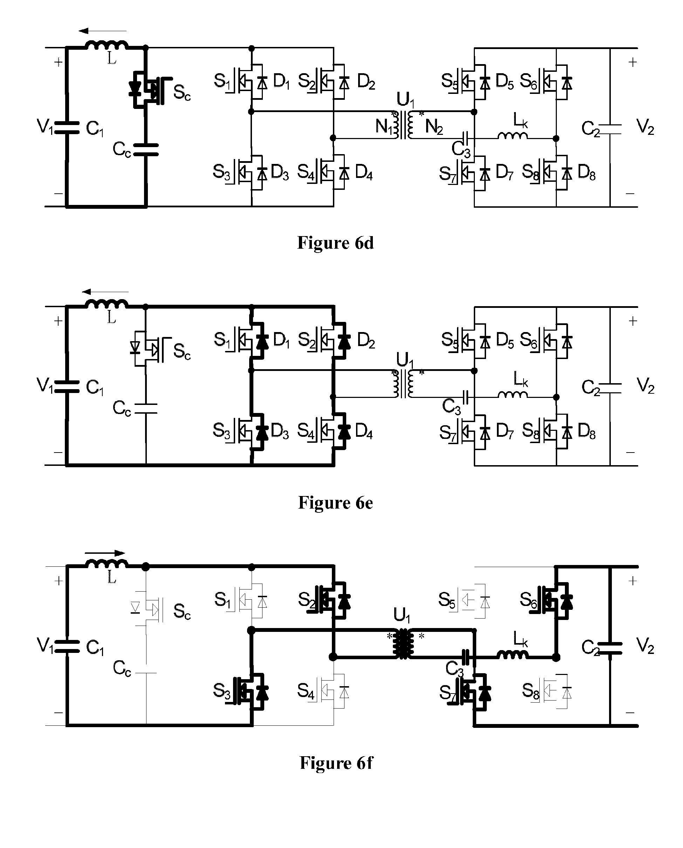

Operating mode 4: the clamp power transistor Sc stays in the on-state, the direction of the inductor current is negative. The clamp capacitor Cc is discharged through the clamp power transistor Sc, to prevent too high voltage across the clamp capacitor Cc. The current in the circuit flows along the path shown in Figure 6d.

Operating mode 5: when the turn-on time of the clamp power transistor Sc reaches 0.25T, the clamp power transistor Sc is turned off, and meanwhile the second power transistor S2 and the third power transistor S3 are turned on. The direction of the inductor current is negative. The inductor current flows through the free wheeling loop consisting of body diodes of the first power transistor S1, the second power transistor S2, the third power transistor S3 and the fourth power transistor S4. The fifth power transistor S5, the sixth power transistor S6, the seventh power transistor S7, and the eighth power transistor S8 located at the output side are turned off, not charging the output side capacitor C2, and the current flows along the path shown in Figure 6e.

Operating mode 6: the second power transistor S2 and the third power transistor S3 stay in the on-state, the direction of the inductor current is positive. The current in the circuit flows along the path shown in Figure 6f. The current at the input side flows along the following path: the positive polarity of the input voltage V1- the input inductor L-the second power transistor S2-the second terminal of primary winding of transformer U1-the first terminal of primary winding of transformer U1-the third power transistor S3-the negative polarity of the input voltage V1. The current at the output side flows along the following path: the second terminal of secondary winding of transformer U1-the third capacitor C3-the output inductor Lk-the body diode of the sixth power transistor S6-the first terminal of the output side capacitor C2-the second terminal of the output side capacitor C2-the body diode of the seventh power transistor S7- the first terminal of secondary winding of transformer U1.

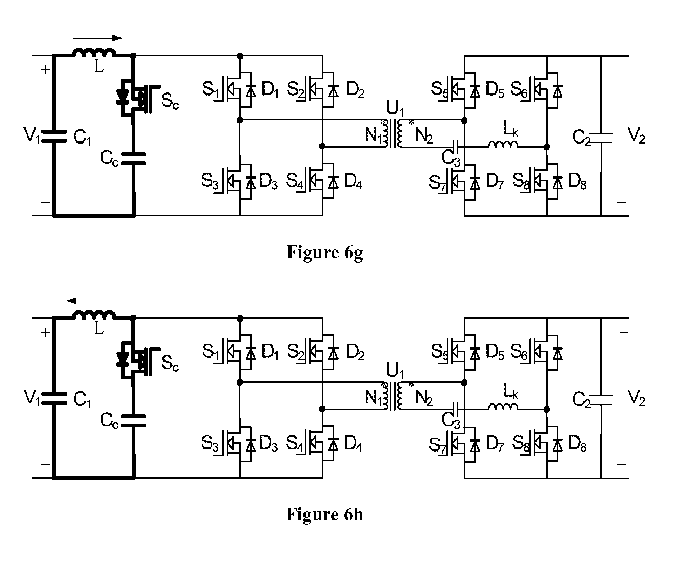

Operating mode 7: when the turn-on time of the second power transistor S2 and the third power transistor S3 reaches 0.25T, the second power transistor S2 and the third power transistor S3 are turned off, and meanwhile the clamp power transistor Sc is turned on. At the moment the first power transistor S1, the second power transistor S2, the third power transistor S3 and the fourth power transistor S4 at the input side are all turned off. The direction of the inductor current is positive. The inductor current charges the clamp capacitor Cc through the body diode of the clamp power transistor Sc, and the input inductor L is demagnetized. The current in the circuit flows along the path shown in Figure 6g.

Operating mode 8: the clamp power transistor Sc stays in the on-state and the direction of the inductor current is negative. The clamp capacitor Cc is discharged through the clamp power transistor Sc, to prevent too high voltage across the clamp capacitor Cc. The current in the circuit flows along the path shown in Figure 6h.

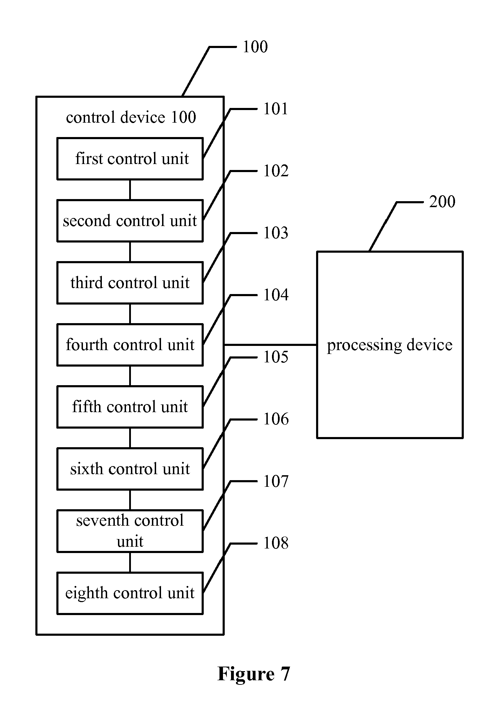

In addition to the method for starting the boost DC/DC circuit with an isolating transformer, the invention provides an apparatus for starting the boost DC/DC circuit with isolating transformer, as shown in Figure 7. The starting apparatus includes a control device 100 and a processing device 200.

The control device 100 is configured to control the turn-on and turn-off of the first power transistor S1, the second power transistor S2, the third power transistor S3 and the fourth power transistor S4, to charge the output side capacitor C2. The control device 100 includes a first control unit 101, a second control unit 102, a third control unit 103, a fourth control unit 104, a fifth control unit 105, a sixth control unit 106, a seventh control unit 107, and a eighth control unit 108.

The first control unit 101 is configured to control a first power transistor pair to be turned on, in order to charge the output side capacitor. The first power transistor pair includes the first power transistor and the fourth power transistor, or the first power transistor pair includes the second power transistor and the third power transistor.

The second control unit 102 is configured to control the first power transistor pair to be turned off when the turn-on time of the first power transistor pair reaches a first duration.

The third control unit 103 is configured to control the clamp power transistor to be turned on, in order to reset the input inductor.

The fourth control unit 104 is configured to control the clamp power transistor to be turned off when the turn-on time of the clamp power transistor reaches a second duration.

The fifth control unit 105 is configured to control the second power transistor pair to be turned on, in order to charge the output side capacitor. In a case that the first power transistor pair includes the first power transistor and the fourth power transistor, the second power transistor pair includes the second power transistor and the third power transistor, and in a case that the first power transistor pair includes the second power transistor and the third power transistor, the second power transistor pair includes the first power transistor and the fourth power transistor. There is a difference of half a switching cycle between the turn-on timing of the first power transistor pair and that of the second power transistor pair.

The sixth control unit 106 is configured to control the second power transistor pair to be turned off when the turn-on time of the second power transistor pair reaches the first duration.

The seventh control unit 107 is configured to control the clamp power transistor to be turned on, in order to reset the input inductor.

The eighth control unit 108 is configured to control the clamp power transistor to be turned off when the turn-on time of the clamp power transistor reaches the second duration.

The processing device 200 is configured to determine the starting process is accomplished, and trigger the control device 100 to stop running in a case that the voltage across the output side capacitor reaches a voltage threshold.

During the control device 100 performs the charging process repeatedly, the processing device 200 obtains the voltage across the output side capacitor. The processing device 200 determines the starting process is accomplished, and triggers the control device 100 to stop running in a case that the voltage across the output side capacitor reaches the voltage threshold. The voltage threshold is N times the input voltage of the boost DC/DC circuit with isolating transformer, where N is a transformation ratio of the isolating transformer.

For the apparatus for starting the boost DC/DC circuit with isolating transformer provided in the invention, the charging operation on the output side capacitor is achieved through controlling the turn-on and turn-off of the four power transistors at the input side, and the starting process is accomplished when the voltage across the output side capacitor reaches the voltage threshold. The starting method in the invention may be realized based on a conventional circuit without modifying the circuit structure, and no power-consumption component such as resistors is added to the circuit, thus no extra loss is produced in the starting process.

In the implementation, the first duration may be set to be less than 0.25T, and the second duration is set to be no greater than the difference between 0.5T and the first duration, where T is the switching period of the first power transistor S1, the second power transistor S2, the third power transistor S3 and the fourth power transistor S4.

According to the invention, alternatively, in a switching cycle, the first power transistor pair and the clamp power transistor Sc are turned on alternately for half the switching cycle, the second power transistor pair and the clamp power transistor Sc are turned on alternately for the remaining half switching cycle. In this case, the first duration is set to be less than 0.5T but no less than 0.25T, and the second duration is set as the difference between 0.5T and the first duration, where T is the switching period of the first power transistor S1, the second power transistor S2, the third power transistor S3 and the fourth power transistor S4.

It should be noted that, in the disclosure, relational terms such as the first and the second are only configured to distinguish an entity or operation from another entity or operation, and it does not necessarily require or imply that there are such actual relationships or sequences among the entities or operations. Furthermore, the term 'include', 'comprise' or any other variant thereof intends to cover a non-exclusive inclusion, thus allows a process, a method, an object or an apparatus including a series of elements to include not only the elements, but also other elements not clearly set out, or to include intrinsic elements of the process, method, object or apparatus. In a case that there are no more restrictions, elements defined by the statement 'include a ...' do not exclude the case that other similar elements exist in the process, method, object or apparatus including the elements.

The embodiments of the disclosure are described in a progressive manner, each embodiment focuses on the difference from other embodiments, and for the same or similar part, the embodiments may refer to each other. The apparatus embodiments may correspond to the method embodiments, thus description is brief, and for relevance, the method part may be referred to.

The above description of the embodiments of the disclosure is to enable those skilled in the art to implement or use the invention. Various modifications made to the embodiments are apparent to those skilled in the art, and the general principles defined in the disclosure may be implemented in other embodiments without departing from the spirit and scope of the invention. Hence, the invention is not limited to the embodiments described in the disclosure, but conforms to a widest scope consistent with the principles and novel features in the disclosure.

## Claims

1. A method for starting a boost DC/DC circuit, wherein the boost DC/DC circuit comprises an isolating transformer, an input inductor, a clamp power transistor, an output side capacitor, a first power transistor, a second power transistor, a third power transistor, and a fourth power transistor, wherein the method comprises:
charging the output side capacitor, until the voltage across the output side capacitor reaches a voltage threshold,
wherein charging the output side capacitor comprises:
turning on a first power transistor pair, to charge the output side capacitor;
turning off the first power transistor pair when the turn-on time of the first power transistor pair reaches a first duration;
turning on the clamp power transistor, to reset the input inductor;
turning off the clamp power transistor when the turn-on time of the clamp power transistor reaches a second duration;
turning on the second power transistor pair, to charge the output side capacitor;
turning off the second power transistor pair when the turn-on time of the second power transistor pair reaches the first duration;
turning on the clamp power transistor, to reset the input inductor; and
turning off the clamp power transistor when the turn-on time of the clamp power transistor reaches the second duration;
wherein the turn-on timings of the first power transistor pair and the second power transistor pair differ by half a switching cycle.

2. The method according to claim 1, wherein the first power transistor pair comprises the first power transistor and the fourth power transistor, and the second power transistor pair comprises the second power transistor and the third power transistor.

3. The method according to claim 1, wherein the first power transistor pair comprises the second power transistor and the third power transistor, and the second power transistor pair comprises the first power transistor and the fourth power transistor.

4. The method according to claim 1, 2 or 3, wherein the first duration is less than 0.25T, and the second duration is no greater than the difference between 0.5T and the first duration, wherein T is the switching period of the first power transistor, the second power transistor, the third power transistor and the fourth power transistor.

5. The method according to claim 1, 2 or 3, wherein the first power transistor pair and the clamp power transistor are turned on alternately for half the switching cycle, and the second power transistor pair and the clamp power transistor are turned on alternately for the other half of the switching cycle, the first duration being less than 0.5T but no less than 0.25T, and the second duration being the difference between 0.5T and the first duration, and
wherein T is the switching period of the first power transistor, the second power transistor, the third power transistor and the fourth power transistor.

6. The method according to claim 1, wherein the voltage threshold is N times the input voltage of the boost DC/DC circuit, wherein N is the transformation ratio of the isolating transformer.

7. An apparatus for starting a boost DC/DC circuit, wherein the boost DC/DC circuit comprises an isolating transformer, an input inductor, a clamp power transistor, an output side capacitor, a first power transistor, a second power transistor, a third power transistor, and a fourth power transistor, wherein the apparatus comprises:
a control device, configured to control the turn-on and turn-off of the first power transistor, the second power transistor, the third power transistor and the fourth power transistor to charge the output side capacitor; and
a processing device, configured to determine the starting process is accomplished and trigger the control device to stop running when the voltage across the output side capacitor reaches a voltage threshold;
wherein the control device comprises
a first control unit, configured to control a first power transistor pair to be turned on, in order to charge the output side capacitor;
a second control unit, configured to control the first power transistor pair to be turned off when the turn-on time of the first power transistor pair reaches a first duration;
a third control unit, configured to control the clamp power transistor to be turned on, in order to reset the input inductor;
a fourth control unit, configured to control the clamp power transistor to be turned off when the turn-on time of the clamp power transistor reaches a second duration;
a fifth control unit, configured to control the second power transistor pair to be turned on, in order to charge the output side capacitor;
a sixth control unit, configured to control the second power transistor pair to be turned off when the turn-on time of the second power transistor pair reaches the first duration;
a seventh control unit, configured to control the clamp power transistor to be turned on, in order to reset the input inductor; and
an eighth control unit, configured to control the clamp power transistor to be turned off when the turn-on time of the clamp power transistor reaches the second duration;
wherein the turn-on timings of the first power transistor pair and the second power transistor pair differ by half a switching cycle.

8. The apparatus according to claim 7, wherein the first power transistor pair comprises the first power transistor and the fourth power transistor, and the second power transistor pair comprises the second power transistor and the third power transistor.

9. The apparatus according to claim 7, wherein the first power transistor pair comprises the second power transistor and the third power transistor, and the second power transistor pair comprises the first power transistor and the fourth power transistor.
